# EUROPEAN PATENT SPECIFICATION

(11) **EP 3 783 232 B1**
(45) Date of publication and mention of the grant of the patent: **04.10.2023**
(21) Application number: 20192128.5
(22) Date of filing: 21.08.2020
(51) Int. Cl.: F16B 37/04

(54) **BOX NUT RETAINER**
HUTMUTTERSICHERUNG
DISPOSITIF DE RETENUE D'ÉCROU DE BOÎTE

(30) Priority: 22.08.2019 US 201962890395 P; 20.08.2020 US 202016998758
(43) Date of publication of application: 24.02.2021
(73) Proprietor: Illinois Tool Works Inc., Glenview, IL 60025 (US)
(72) Inventor: BUCZYNSKI, Gregory George, Glenview, IL 60025 (US)
(74) Representative: HGF

(56) References cited:
- WO-A1-2018/144210
- DE-U1-202013 100 387
- US-B2- 7 789 606
- US-B2- 8 388 289

## Description

### RELATED APPLICATIONS

The present application claims priority to U.S. Provisional Application Serial No. 62/890,395 filed on August 22, 2019.

### FIELD OF THE DISCLOSURE

Embodiments of the present disclosure generally relate to a fastening system, and, more particularly, to a box nut retainer system that is configured to securely connect multiple components together.

### BACKGROUND

In recent years, retainers have been developed to fasten panels to one another. For example, vehicles include various panels (e.g., sheet metal or polymer) connected to one another to form the body, doors, and interior of the vehicle.

Certain known retainers are configured to fit into an opening defined in a panel. When a fastener is threaded into the retainer, the retainer expands to retainingly engage the panel.

Document WO 2018 144210 A1 discloses a box nut retainer system including a panel configured to receive a fastener. The box nut retainer system includes a plurality of retainer legs extending from the panel. The box nut retainer system includes planar bends positioned at distal ends of the plurality of retainer legs. Straight beams extend from the planar bends. The straight beams have engagement angles relative to the plurality of retainer legs.

However, these known retainers fit do not tightly engage relatively thin panels prior to or after installing a fastener. Relative movement between the retainer and the panel may lead to misalignment of the fastener in the retainer, rattling noises, and/or wear to the panel.

Therefore, a need exists for a box nut that is configured to remain at a secure fixed position in relation to a relatively thin component, such as a panel.

### SUMMARY

A box nut retainer according to the invention is set out in the appended claims.

### BRIEF DESCRIPTION OF SEVERAL VIEWS OF THE DRAWINGS

FIG. 1 is an isometric view of a first example box nut retainer according to an embodiment of the present disclosure;
FIG. 2 is another isometric view of the first example box nut retainer of FIG. 1;
FIG. 3 is an end view of the first example box nut retainer of FIGS. 1 and 2;
FIG. 4 is another end view of the first example box nut retainer of FIGS. 1-3;
FIG. 5 is a side view of the first example box nut retainer of FIGS. 1-4;
FIG. 6 is another side view of the first example box nut retainer of FIGS. 1-5;
FIG. 7 is a top view of the first example box nut retainer of FIGS. 1-6;
FIG. 8 is a bottom view of the first example box nut retainer of FIGS. 1-7;
FIG. 9 is a cross-sectional view of the first example box nut retainer of FIGS. 1-8 taken along line 9-9 of FIG. 8;
FIG. 10 is an isometric view of the first example box nut retainer of FIGS. 1-9 installed in a panel;
FIG. 11 is a top view of the first example box nut retainer of FIGS. 1-10 installed in the panel of FIG. 10;
FIG. 12 is a bottom view of the first example box nut retainer of FIGS. 1-11 installed in the panel of FIGS. 10 and 11;
FIG. 13 is a cross-sectional view of the first example box nut retainer of FIGS. 1-12 installed in the panel of FIGS. 10-12 taken along line 13-13 of FIG. 12;
FIG. 14 is a side view of a first example assembly including the first example box nut retainer of FIGS. 1-13 installed in the panel of FIGS. 10-13 and utilized with a fastener;
FIG. 15 is a bottom view of the first example assembly of FIG. 14;
FIG. 16 is a cross-sectional view of the first example assembly of FIGS. 13 and 14 taken along line 16-16 of FIG. 15;
FIG. 17 is an isometric view of a second example box nut retainer according to an embodiment of the present disclosure;
FIG. 18 is another isometric view of the second example box nut retainer of FIG. 17;
FIG. 19 is an end view of the second example box nut retainer of FIGS. 17 and 18;
FIG. 20 is another end view of the second example box nut retainer of FIGS. 17-19;
FIG. 21 is a side view of the second example box nut retainer of FIGS. 17-20;
FIG. 22 is another side view of the second example box nut retainer of FIGS. 17-21;
FIG. 23 is a top view of the second example box nut retainer of FIGS. 17-22;
FIG. 24 is a bottom view of the second example box nut retainer of FIGS. 17-23;
FIG. 25 is a cross-sectional view of the second example box nut retainer of FIGS. 17-24 taken along line 25-25 of FIG. 24;
FIG. 26 is a top view of the second example box nut retainer of FIGS. 17-25 installed in the panel of FIGS. 10-16;
FIG. 27 is a bottom view of the second example box nut retainer of FIGS. 17-26 installed in the panel of FIGS. 10-16 and 26;
FIG. 28 is a cross-sectional view of the second example box nut retainer of FIGS. 17-27 installed in the panel of FIGS. 10-16, 26, and 27 taken along line 28-28 of FIG. 27;
FIG. 29 is a side view of a second example assembly including the second example box nut retainer of FIGS. 17-28 installed in the panel of FIGS. 10-16 and 26-28 utilized with the fastener of FIGS. 14-16;
FIG. 30 is a bottom view of the second example assembly of FIG. 29; and
FIG. 31 is a cross-sectional view of the second example assembly of FIGS. 29 and 30 taken along line 31-31 of FIG. 30.

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting.

### DETAILED DESCRIPTION OF EMBODIMENTS OF THE DISCLOSURE

Embodiments of the present disclosure provide first and second box nut retainers with features that facilitate installation of the first and second box nut retainers into relatively thin panels and thus provide attachment points for fasteners to the relatively thin panels.

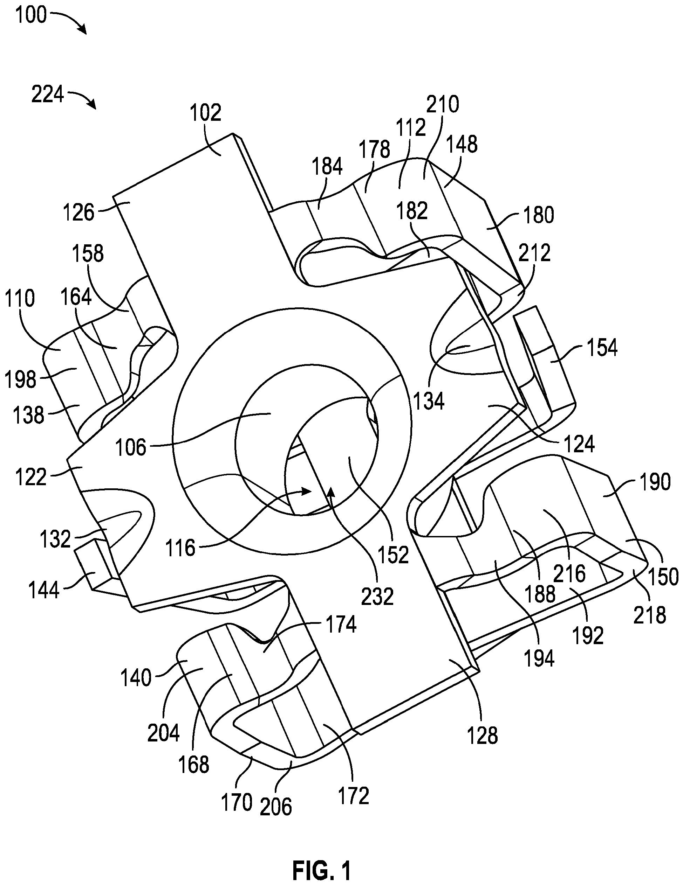

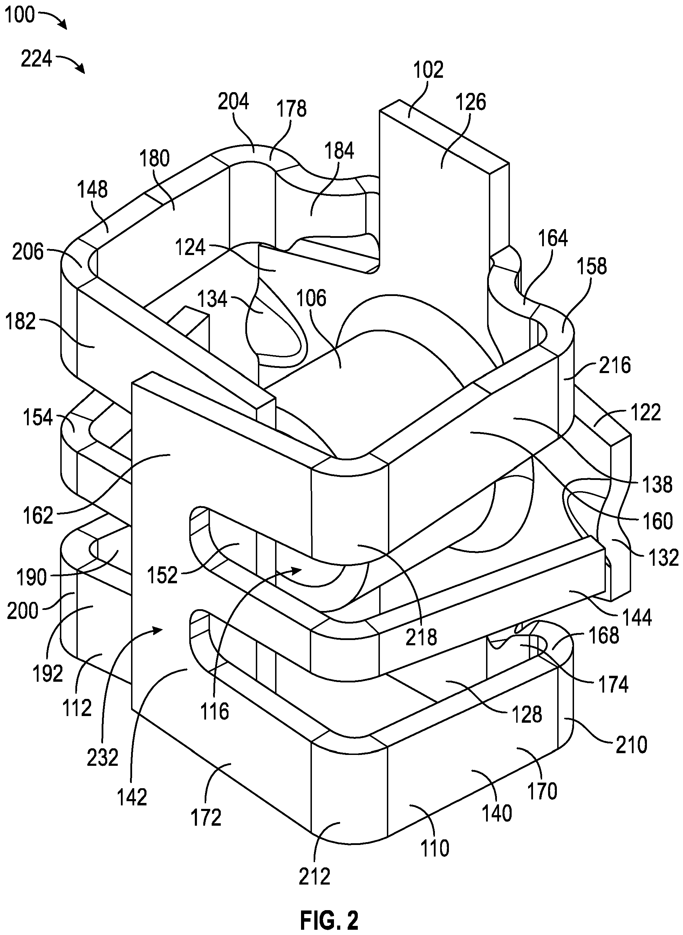

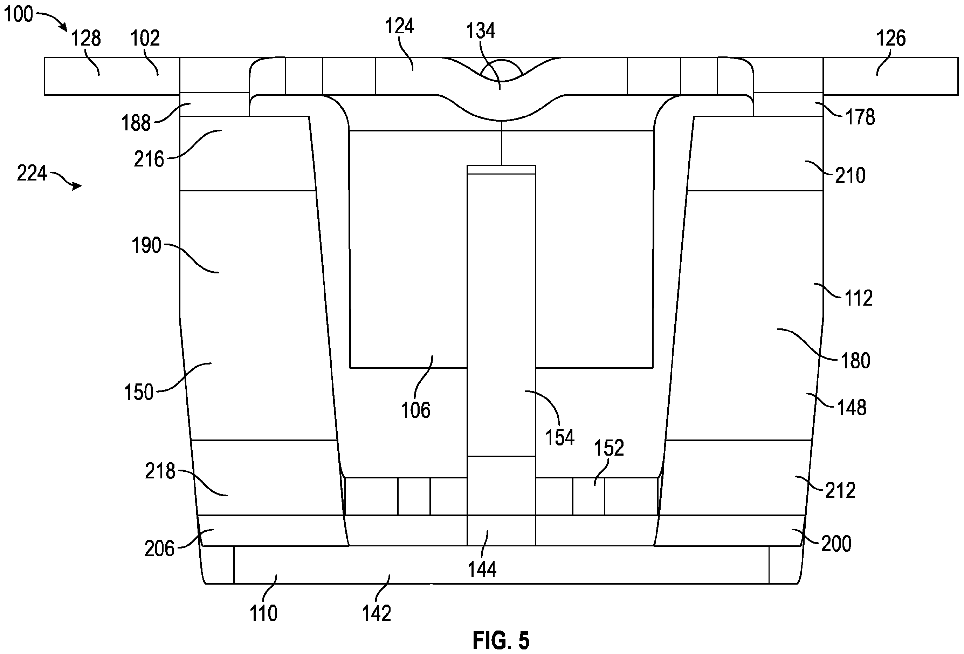

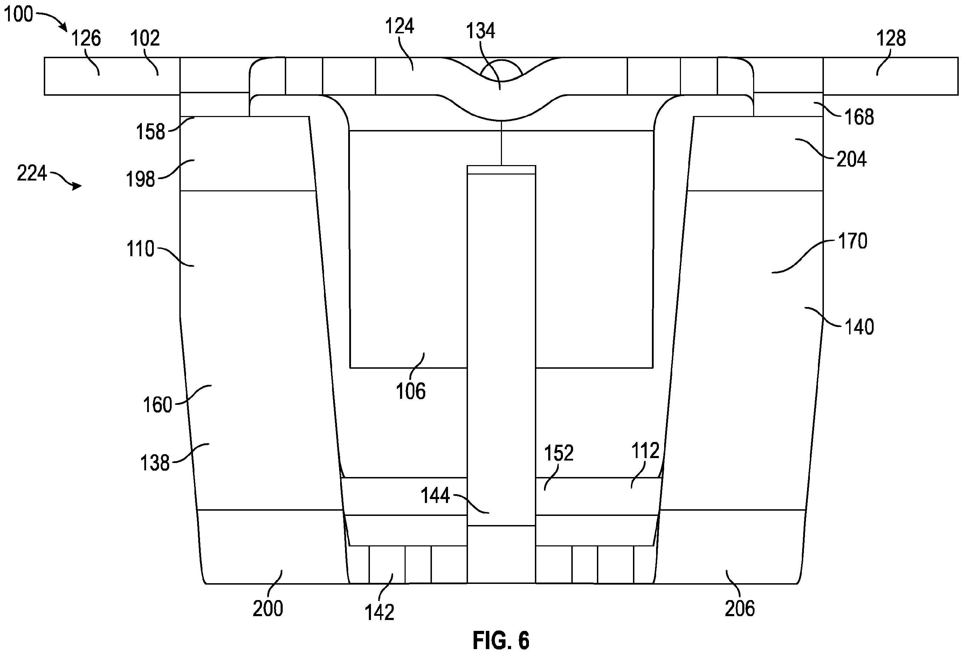

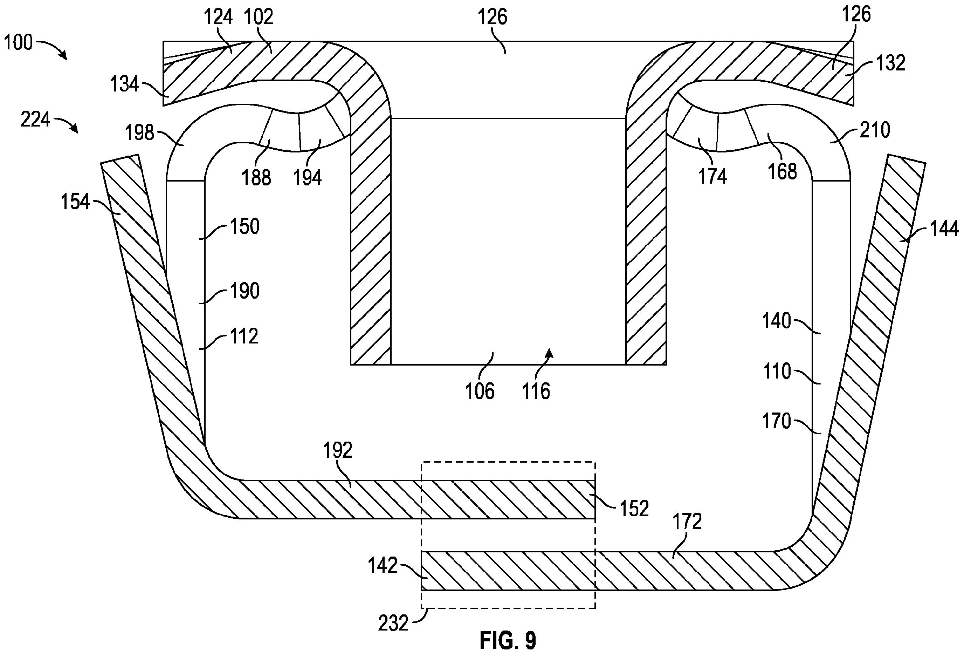

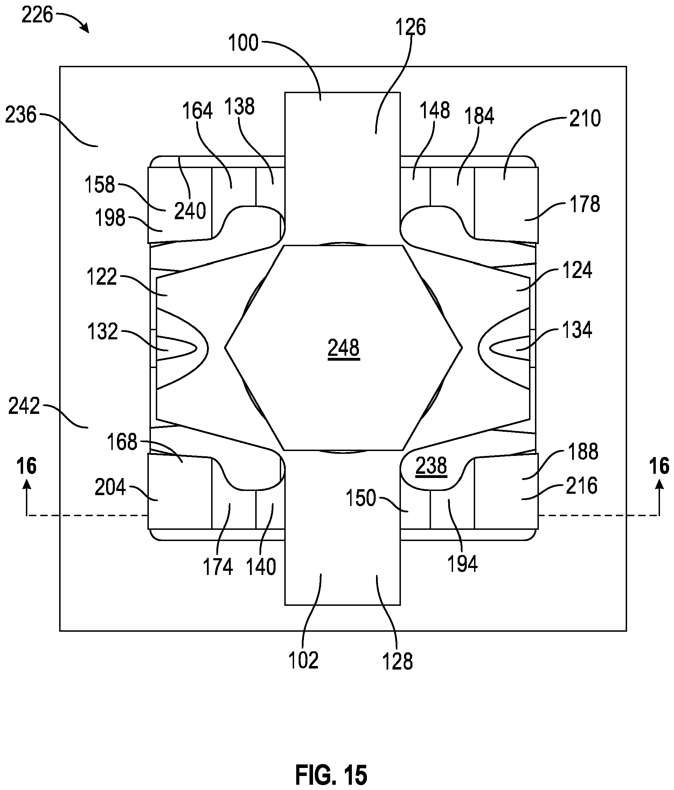

A first example box nut retainer 100 according to an embodiment of the present disclosure is depicted in FIGS. 1-16. The box nut retainer 100 includes a support 102 that extends a length of the box nut retainer 100. With reference to FIGS. 1-6, 8-10, 12, and 13, the box nut retainer 100 further includes a fastener sleeve 106, a first wing 110, and a second wing 112.

With reference to FIGS. 1, 2, 8-10, 12, and 13, the support 102 and the fastener sleeve 106 define an opening 116. More specifically, the fastener sleeve 106 extends downwardly from the support 102 to define the opening 116. The opening 116 extends through the support 102. The fastener sleeve 106 is centrally positioned relative to the support 102. With reference to FIGS. 1, 2, 7, 8, and 10-12, the support 102 includes a first tab 122, a second tab 124, a third tab 126, and a fourth tab 128. The first tab 122 is opposite the second tab 124. The third tab 126 is opposite the fourth tab 128. The first tab 122 is adjacent to the third tab 126 and the fourth tab 128. The second tab 124 is adjacent to the third tab 126 and the fourth tab 128. Thus, the support 102 is generally cruciform. With reference to FIGS. 1, 2, 8, 10, and 12, the fastener sleeve 106 is interposed between the first, second, third, and fourth tabs 122, 124, 126, 128. With reference to FIGS. 1-4 and 7-13 the first tab 122 includes a first retaining dip 132. The second tab 124 includes a second retaining dip 134. The first tab 122 is longer than the third tab 126 and the fourth tab 128. The second tab 124 is longer than the third tab 126 and the fourth tab 128.

With reference to FIGS. 1, 2, and 10, the first wing 110 includes a first leg 138, a second leg 140, a first connector 142, and a first snap arm 144. The first connector 142 is connected to the first leg 138 and the second leg 140. The first snap arm 144 extends from the first connector 142 between the first leg 138 and the second leg 140. The first leg 138 and the second leg 140 are C-shaped. The first snap arm 144 is L-shaped. The first snap arm 144 extends outwardly and diagonally beyond the first leg 138 and the second leg 140 toward the support 102. The first snap arm 144 extends beyond the support 102.

With reference to FIGS. 1, 2, and 10, the second wing includes a third leg 148, a fourth leg 150, a second connector 152, and second snap arm 154. The second connector 152 is connected to the third leg 148 and the fourth leg 150. The second snap arm 154 extends from the second connector 152 between the third leg 148 and the fourth leg 150 toward the support 102. The third leg 148 and the fourth leg 150 are C-shaped. The second snap arm 154 is L-shaped. The second snap arm 154 extends outwardly and diagonally beyond the third leg 148 and the fourth leg 150 toward the support 102. The second snap arm 154 extends beyond the support 102. The first snap arm 144 and the second snap arm 154 extend oppositely from one another.

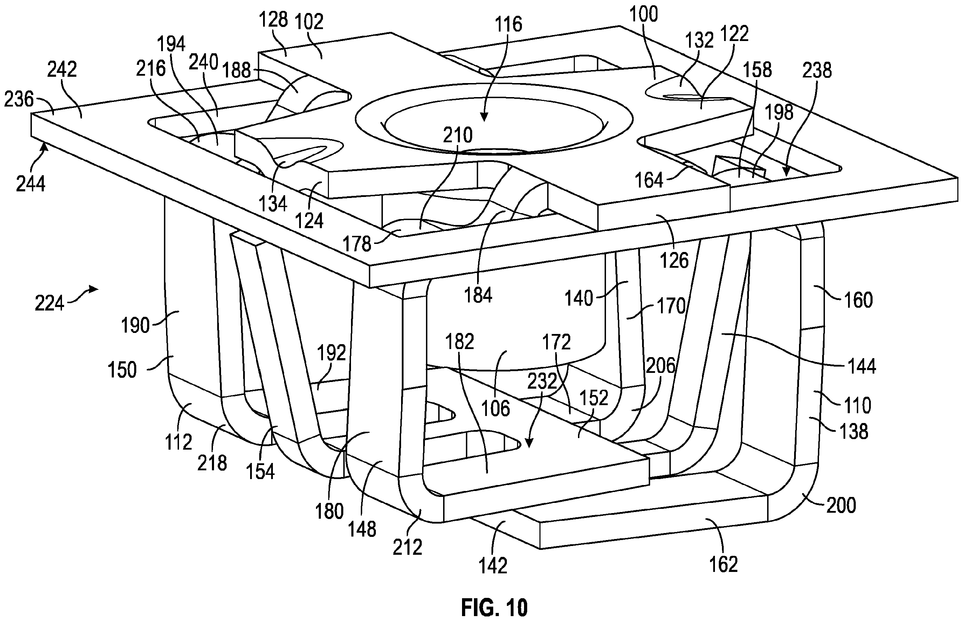

With reference to FIGS. 1, 2, and 10, the first wing 110 and the second wing 112 are connected to the support 102 opposite one another. With reference to FIGS. 1 and 10, more specifically, the first leg 138 and the third leg 148 are connected to the third tab 126 opposite one another. Further, the second leg 140 and the fourth leg 150 are connected to the fourth tab 128 opposite one another.

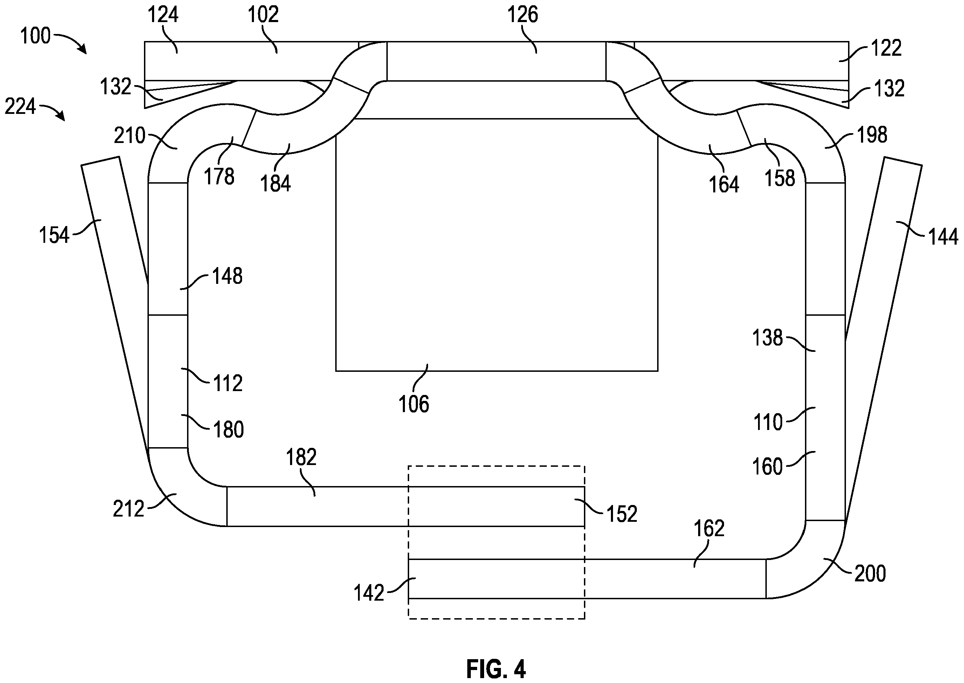

With reference to FIG. 4, the first leg 138 includes a first top extender 158, a first descender 160, and a first bottom extender 162. The first top extender 158 includes a first kink 164. The first kink 164 is arcuate. The first top extender 158 is connected to the support 102 via the third tab 126. The first descender 160 is connected to the first top extender 158 and to the first bottom extender 162. The first top extender 158 extends curvilinearly and downwardly from the third tab 126 between the fastener sleeve 106 and the first tab 122.

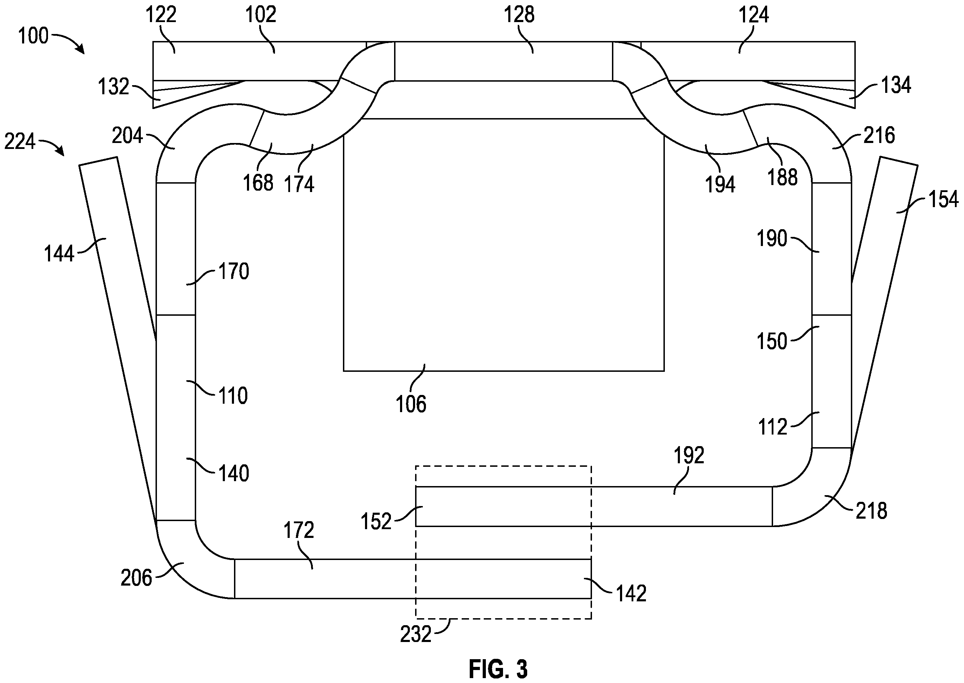

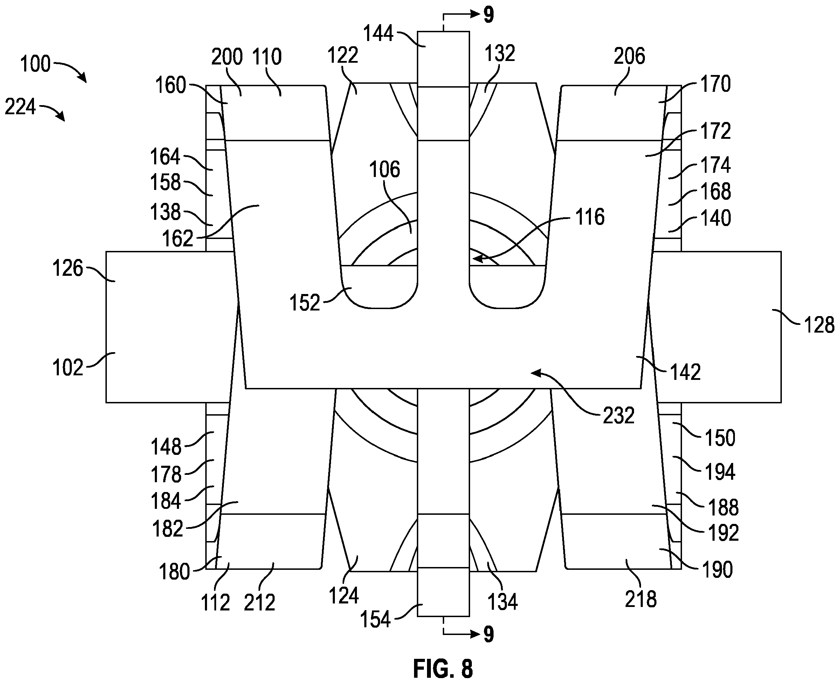

With reference to FIG. 3, the second leg 140 includes a second top extender 168, a second descender 170, and a second bottom extender 172. The second top extender includes a second kink 174. The second kink 174 is arcuate. The second top extender 168 is connected to the support 102 via the fourth tab 128. The second descender 170 is connected to the second top extender 168 and the second bottom extender 172. The second top extender 168 extends curvilinearly and downwardly from the fourth tab 128 between the fastener sleeve 106 and the first tab 122. With reference to FIG. 8, the first bottom extender 162 is connected to the second bottom extender 172 via the first connector 142.

With reference to FIG. 4, the third leg 148 includes a third top extender 178, a third descender 180, and a third bottom extender 182. The third top extender 178 includes a third kink 184. The third kink 184 is arcuate. The third top extender 178 is connected to the support 102 via the third tab 126 opposite the first top extender 158. The third descender 180 is connected to the third top extender 178 and to the third bottom extender 182. The third top extender 178 extends curvilinearly and downwardly from the third tab 126 between the fastener sleeve 106 and the second tab 124.

With reference to FIG. 3, the fourth leg 150 includes a fourth top extender 188, a fourth descender 190, and a fourth bottom extender 192. The fourth top extender includes a fourth kink 194. The fourth kink 194 is arcuate. The fourth top extender 188 is connected to the support 102 via the fourth tab 128 opposite the second top extender 168. The fourth descender 190 is connected to the fourth top extender 188 and the fourth bottom extender 192. The fourth top extender 188 extends curvilinearly and downwardly from the fourth tab 128 between the fastener sleeve 106 and the second tab 124. With reference to FIG. 8, the third bottom extender 182 is connected to the fourth bottom extender 192 via the second connector 152.

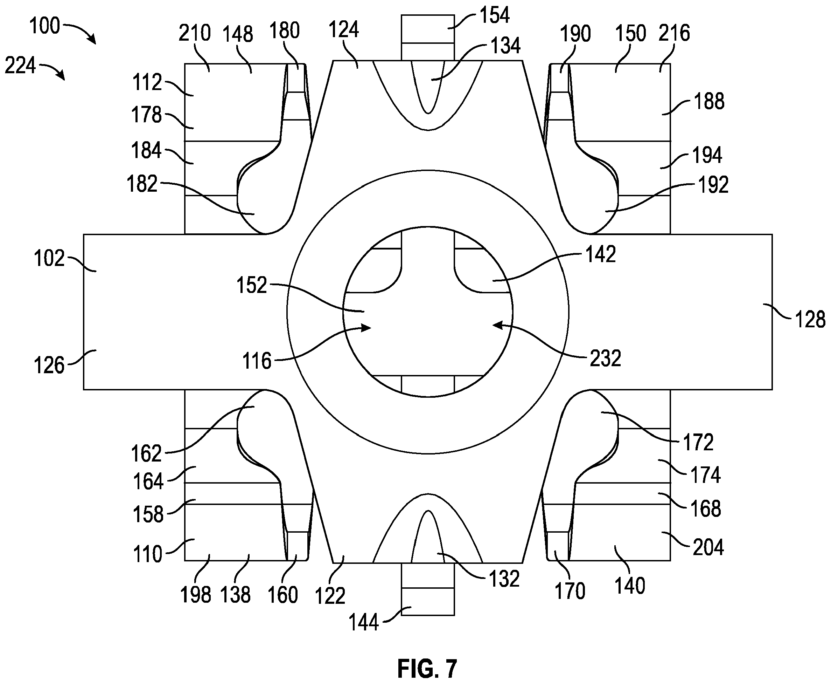

With reference to FIG. 7, the first top extender 158 and the second top extender 168 are generally parallel to one another. The third top extender 178 and the fourth top extender 188 are generally parallel to one another.

With reference to FIG. 4, the first descender 160 and the first top extender 158 define a first top corner 198. Additionally, the first descender 160 and the first bottom extender 162 define a first bottom corner 200.

With reference to FIG. 3, the second descender 170 and the second top extender 168 define a second top corner 204. Additionally, the second descender 170 and the second bottom extender 172 define a second bottom corner 206.

With reference to FIG. 4, the third descender 180 and the third top extender 178 define a third top corner 210. Additionally, the third descender 180 and the third bottom extender 182 define a third bottom corner 212.

With reference to FIG. 3, the fourth descender 190 and the fourth top extender 188 define a fourth top corner 216. Additionally, the fourth descender 190 and the fourth bottom extender 192 define a fourth bottom corner 218.

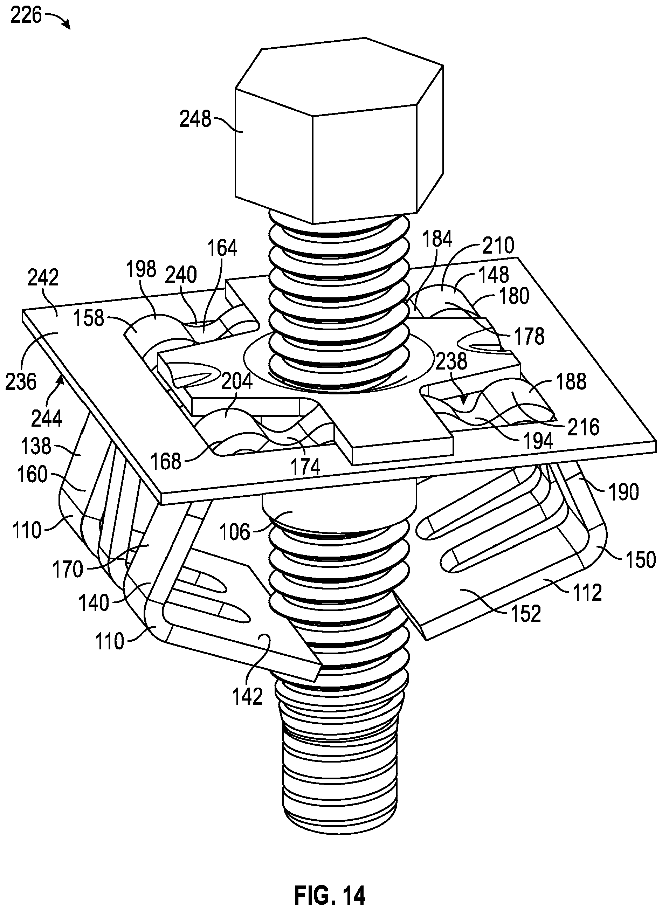

With reference to FIGS. 1-13, the box nut retainer 100 is shown in a relaxed state 224. With reference to FIGS. 14-16, the box nut retainer 100 is shown is a deployed state 226. With reference to FIGS. 1-4 and 7-13, when the box nut retainer 100 is in the relaxed state 224, the first wing 110 and the second wing 112 overlap one another at an overlap region 232. With reference to FIGS. 1, 2, and 7-13, the overlap region 232 at least partially overshadows the opening 116. With reference to FIG. 3, when the box nut retainer 100 is in the relaxed state 224, the second top corner 204 is below the support 102 between the fastener sleeve 106 and the first tab 122. When the box nut retainer 100 is in the relaxed state 224, the fourth top corner 216 is below the support 102 between the fastener sleeve 106 and the second tab 124. With reference to FIG. 4, when the box nut retainer 100 is in the relaxed state 224, the first top corner 198 is below the support 102 between the fastener sleeve 106 and the first tab 122. When the box nut retainer 100 is in the relaxed state 224, the third top corner 210 is below the support 102 between the fastener sleeve 106 and the second tab 124.

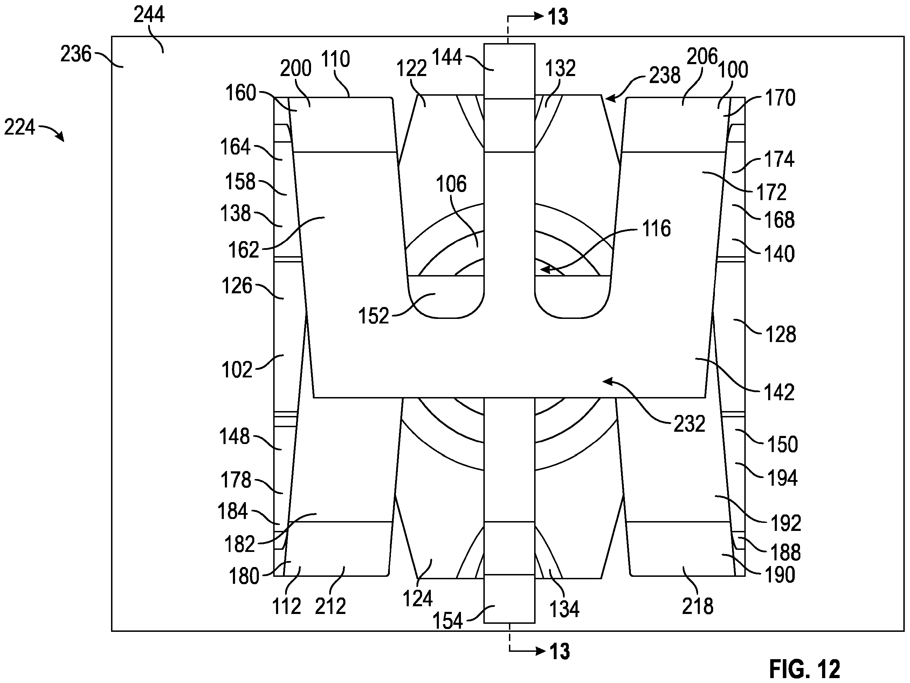

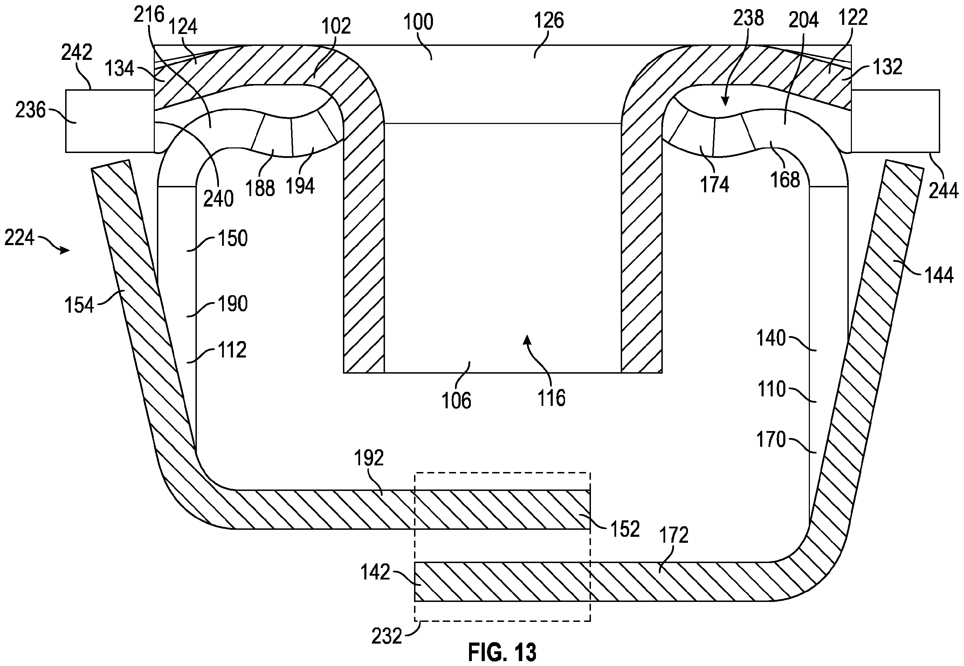

With reference to FIGS. 10-13, the first example box nut retainer 100 is installed in a panel 236. The panel 236 defines an aperture 238. With reference to FIGS. 10, 11, and 13, the panel 236 includes walls 240 and a top surface 242. With reference to FIGS. 12 and 13, the panel 236 includes a bottom surface 244. With reference to FIGS. 10-13, more specifically, the walls 240 define the aperture 238. With reference to FIGS. 10-12, the aperture 238 is noncircular (e.g., rectangular, square, polygonal, ovate, etc.).

With reference to FIGS. 14-17, the first example box nut retainer 100 is installed in the panel 236 and engaged with a fastener 248 (e.g., a screw or a bolt). The fastener 248 is externally threaded. The fastener sleeve 106 is configured to receive the fastener 248. In some embodiments, the fastener sleeve 106 is internally threaded to guide and/or align the fastener 248 to traverse through the fastener sleeve 106.

With reference to FIGS. 14-17, additionally or alternatively, the fastener sleeve 106 may be configured to accept a specific type of fastener. As but one non-limiting example, the fastener sleeve 106 may be configured to accept M series fasteners. The fastener sleeve 106 may be configured to have an inner diameter compatible with a specific M series fastener. Optionally, the M series screws and/or bolts are based on the International Organization for Standardization (ISO) 965, "ISO General Purpose Metric Screw Thread - Tolerances," the American National Standards Institute B4.2-1978, "Preferred Metric Limits and Fits," the American National Standards Institute B1.13M, "Metric Screw Threads: M Profile," and/or the like. In other examples, the fastener sleeve 106 may be configured to accept non-threaded fasteners (e.g., rivets, barbed push-in fasteners, rods, dowels, etc.).

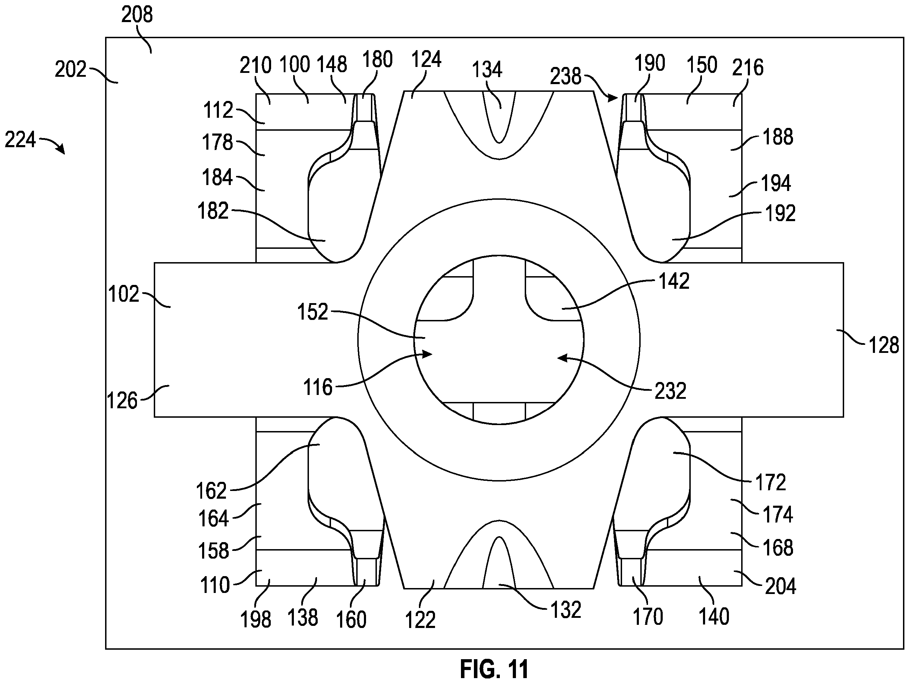

With reference to FIGS. 10 and 11, in operation, when the first example box nut retainer 100 is installed into the panel 236, the support 102, the first wing 110, and the second wing 112 engage the panel 236. The box nut retainer 100 is introduced into the aperture 238 via the first wing 110 and the second wing 112.

With reference to FIG. 13, it should be understood that, in operation, the first snap arm 144 and the second snap arm 154 deflect inwardly toward the fastener sleeve 106 as the first wing 110 and the second wing 112 are inserted into the aperture 238. Once the first snap arm 144 and the second snap arm 154 clear the bottom surface 244, the first snap arm 144 and the second snap arm 154 resiliently snap outwardly away from fastener sleeve 106. Thus, the first snap arm 144 and the second snap arm 154 prevent the box nut retainer 100 from being pulled out of the aperture 238 of the panel 236. With reference to FIGS. 10 and 11, the third tab 126 and the fourth tab 128 engage the top surface 242 to prevent the box nut retainer 100 from being pushed completely through the aperture 238 of the panel 236. With reference to FIG. 10, in other words, the third tab 126, the fourth tab 128, the first snap arm 144, and the second snap arm 154 transversely retain the box nut retainer 100 in the aperture 238 of the panel 236. It should be understood that when the box nut retainer 100 is installed in the panel 236 and in the relaxed state 224, the third tab 126, the fourth tab 128, the first snap arm 144, and the second snap arm 154 loosely retain the box nut retainer 100 in the aperture 238 of the panel 236.

With reference to FIGS. 10-12, the first wing 110, the second wing 112, the first tab 122, and the second tab 124 engage the walls 240 of the panel 236. More specifically, with reference to FIGS. 10 and 13, when the box nut retainer 100 is installed in the panel 236, the first retaining dip 132 and the second retaining dip 134 are partially disposed between the top surface 242 and the bottom surface 244 to abuttingly engage the walls 240. Further, the second top extender 168 and the fourth top extender 188 are partially disposed between the top surface 242 and the bottom surface 244 to abuttingly engage the walls 240. Additionally, with reference to FIG. 10, the first top extender 158 and the third top extender 178 are partially disposed between the top surface 242 and the bottom surface 244 to abuttingly engage the walls 240. Thus, the first retaining dip 132, the second retaining dip 134, the first top extender 158, the second top extender 168, the third top extender 178, and the fourth top extender 188 prevent the box nut retainer 100 from sliding relative to the panel 236. In other words, the support 102, the first wing 110, and the second wing 112 laterally retain the box nut retainer 100 in the aperture 238 of the panel 236.

With reference to FIG. 13, when the box nut retainer 100 is installed in the panel 236 and in the relaxed state 224, the second top corner 204, the second kink 174, the fourth top corner 216, and the fourth kink 194 are between the top surface 242 and the bottom surface 244. Additionally, with reference to FIG. 10, when the box nut retainer 100 is installed in the panel 236 and in the relaxed state 224, the first top corner 198, the first kink 164, the third top corner 210, and the third kink 184 are between the top surface 242 and the bottom surface 244.

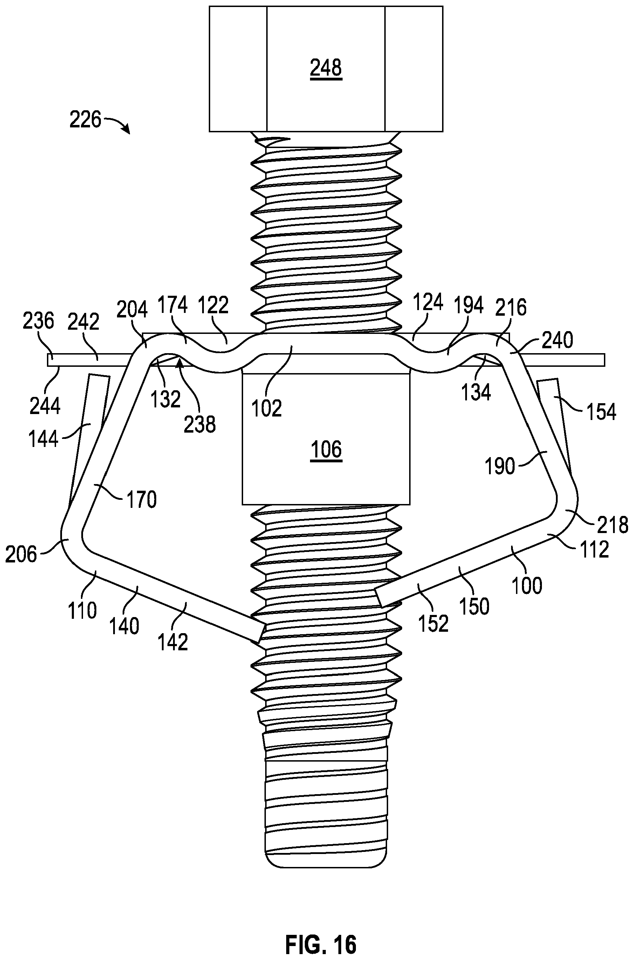

With reference to FIG. 14, further in operation, as the fastener 248 is threaded into the fastener sleeve 106, the fastener 248 initially contacts the second wing 112 and subsequently contacts the first wing 110. As the fastener 248 is threadingly driven against the first wing 110 and the second wing 112, the first wing 110 and the second wing 112 pivot relative to the support 102 to deflect outwardly away from the fastener sleeve 106 into the deployed state 226. More specifically, the first leg 138, the second leg 140, the third leg 148, and the fourth leg 150 respectively bend at the first kink 164, the second kink 174, the third kink 184, and the fourth kink 194. When the box nut retainer 100 is in the deployed state 226, the first top corner 198, the second top corner 204, the third top corner 210, and the fourth top corner 216 are pushed out of the aperture 238 beyond the top surface 242 and the support 102. Thus, with reference to FIGS. 14 and 16, when the box nut retainer 100 is in the deployed state 226, the second descender 170 and the fourth descender 190 contact the walls 240 and the bottom surface 244. With reference to FIG. 14, the first descender 160 and the third descender 180 also contact the walls 240 and the bottom surface 244. In other words, as the first wing 110 and the second wing 112 deploy under pressure applied by the fastener 248, the first descender 160, the second descender 170, the third descender 180, and the fourth descender 190 are driven against the walls 240 and the bottom surface 244 to draw the third tab 126 and the fourth tab 128 against the top surface 242. Thus, when the box nut retainer 100 is installed in the panel 236 and in the deployed state 226, the third tab 126, the fourth tab 128, the first wing 110, and the second wing 112 tightly retain the box nut retainer 100 in the aperture 238 of the panel 236. In other words, when the box nut retainer 100 is installed in the panel 236 and in the deployed state 226, the panel 236 is clamped between the support 102 and the first wing 110 and between the support 102 and the second wing 112.

With reference to FIGS. 14-16, it should be understood that additional components (e.g., a second panel, a wiring harness, a brake line router, etc.) (not shown) may be used with the fastener 248. The fastener 248 may be driven into the box nut retainer 100 to robustly attach the additional components to the panel 236.

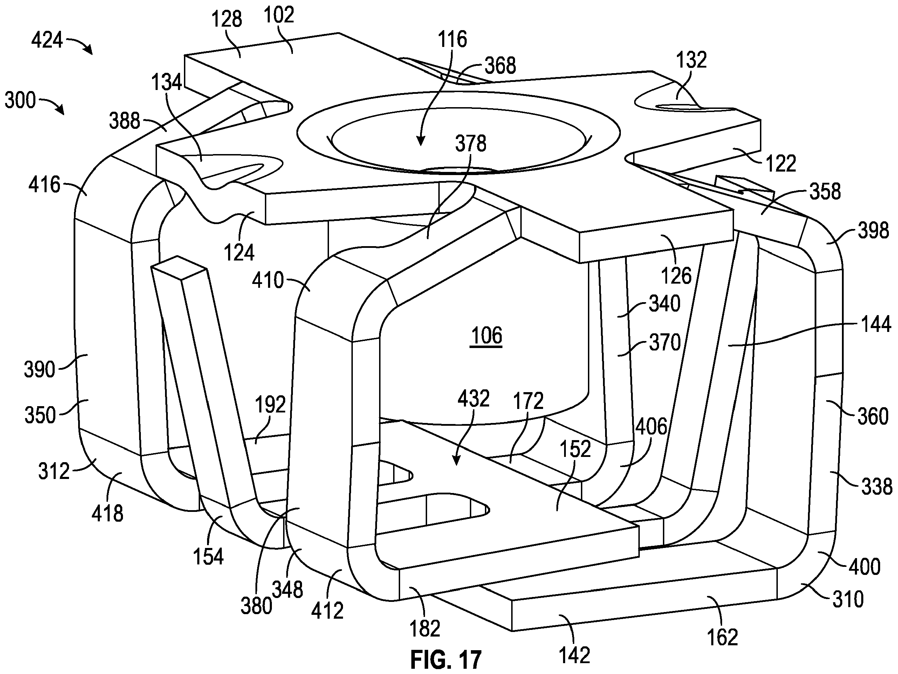

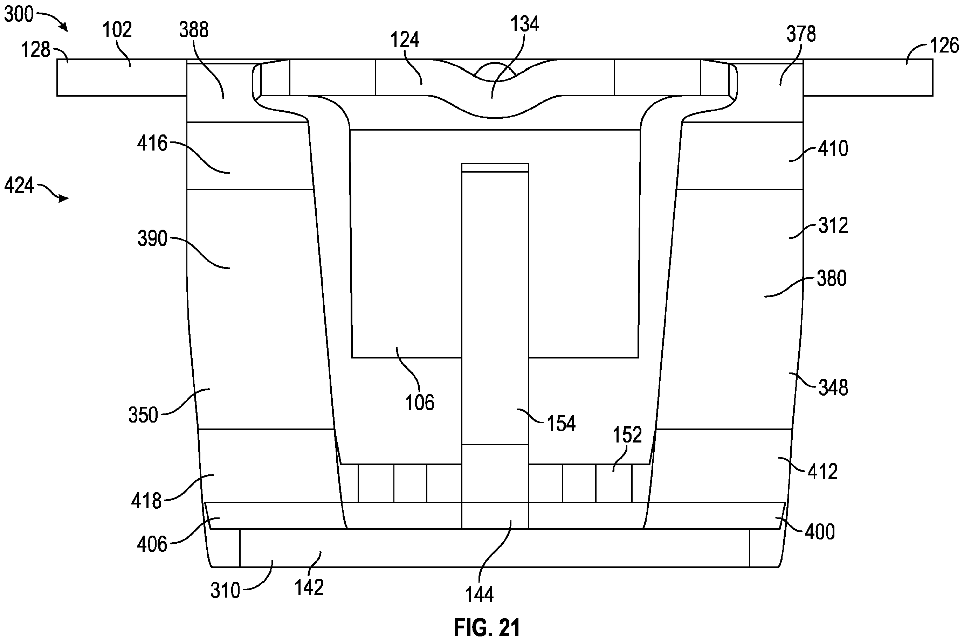

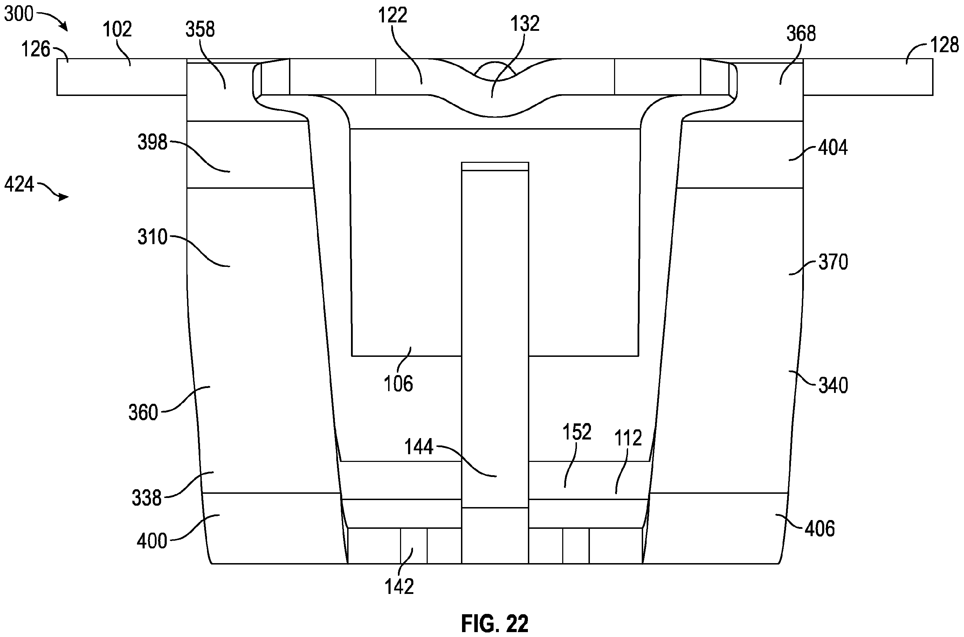

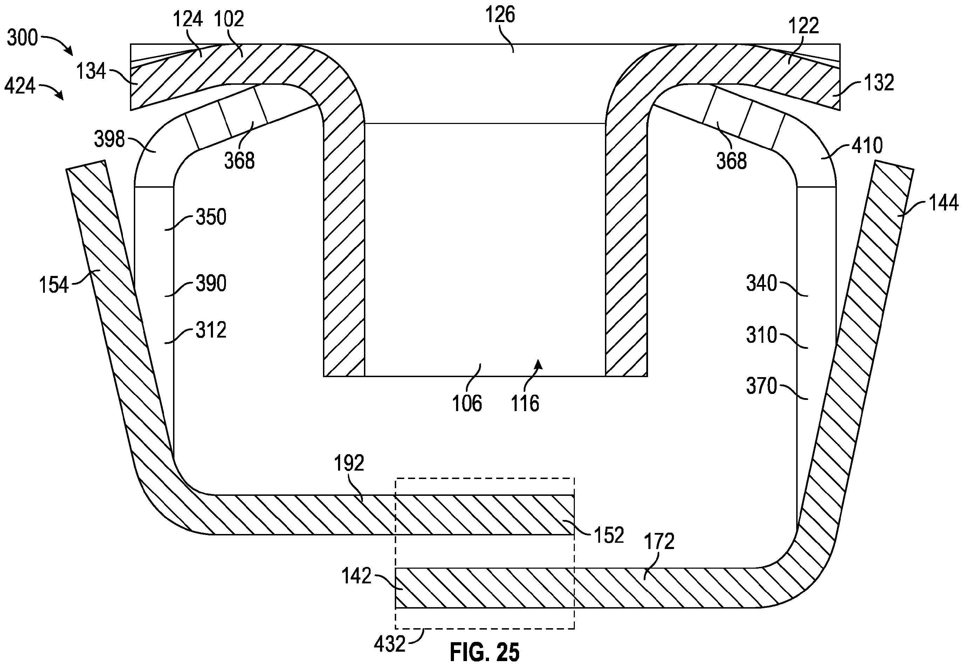

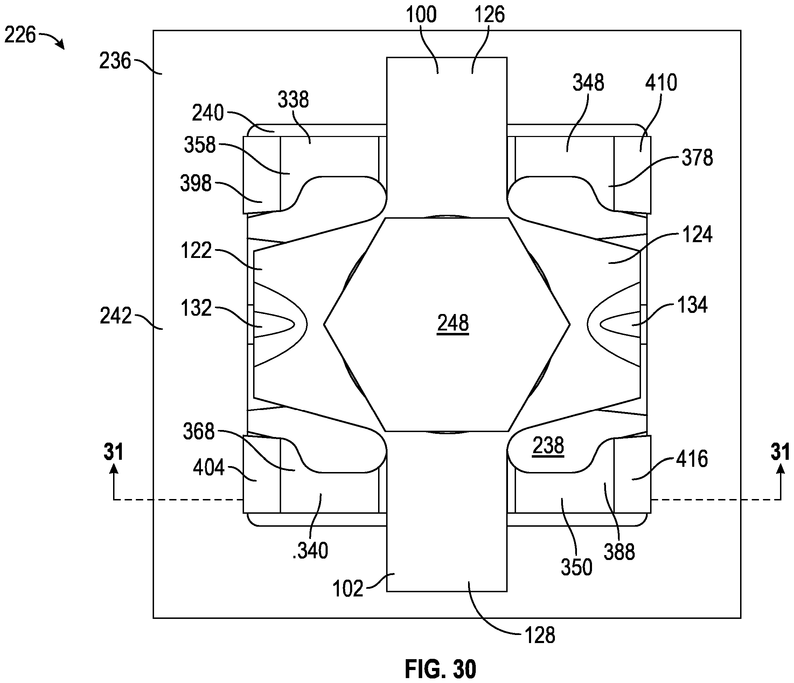

A second example box nut retainer 300 according to an embodiment of the present disclosure is depicted in FIGS. 17-31. With reference to FIGS. 17-22, 24, 25, 27-29, and 31 the box nut retainer 300 includes the support 102 and the fastener sleeve 106 as described above. The box nut retainer 300 also includes a first wing 310 and a second wing 312.

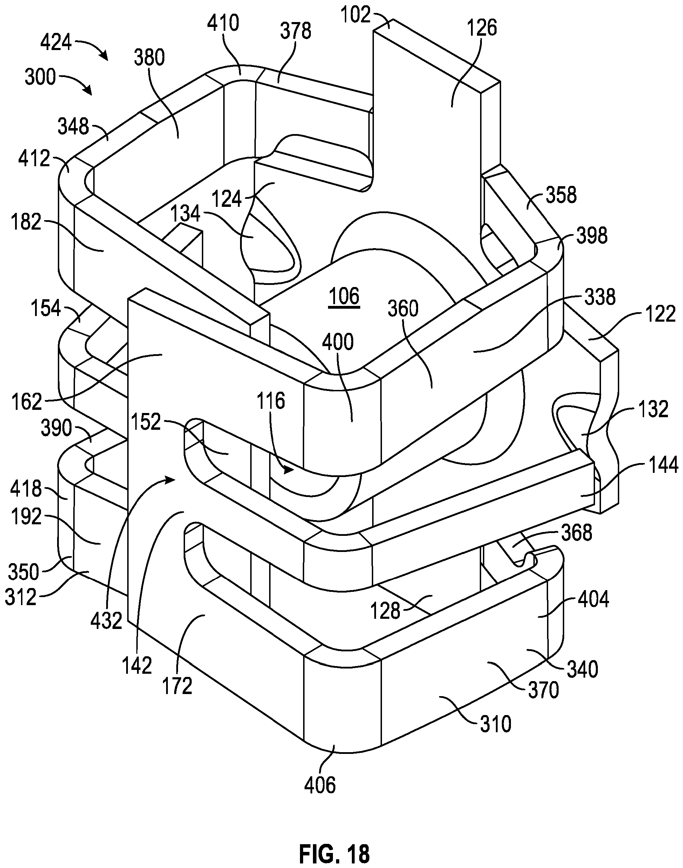

With reference to FIGS. 17 and 18, the first wing 310 includes a first leg 338, a second leg 340, the first connector 142, and the first snap arm 144. The first connector 142 is connected to the first leg 338 and the second leg 340. The first snap arm 144 extends from the first connector 142 between the first leg 338 and the second leg 340. The first leg 338 and the second leg 340 are C-shaped. The first snap arm 144 is L-shaped. The first snap arm 144 extends outwardly and diagonally beyond the first leg 338 and the second leg 340 toward the support 102. The first snap arm 144 extends beyond the support 102.

With reference to FIGS. 17 and 18, the second wing 312 includes a third leg 348, a fourth leg 350, the second connector 152, and the second snap arm 154. The second connector 152 is connected to the third leg 348 and the fourth leg 350. The second snap arm 154 extends from the second connector 152 between the third leg 348 and the fourth leg 350. The third leg 348 and the fourth leg 350 are C-shaped. The second snap arm 154 is L-shaped. The second snap arm 154 extends outwardly and diagonally beyond the third leg 348 and the fourth leg 350 toward the support 102. The second snap arm 154 extends beyond the support 102. The first snap arm 144 and the second snap arm 154 extend oppositely from one another.

With reference to FIGS. 17 and 18, the first wing 310 and the second wing 312 are connected to the support 102 opposite one another. More specifically, the first leg 338 and the third leg 348 are connected to the third tab 126 opposite one another. Further, the second leg 340 and the fourth leg 350 are connected to the fourth tab 128 opposite one another.

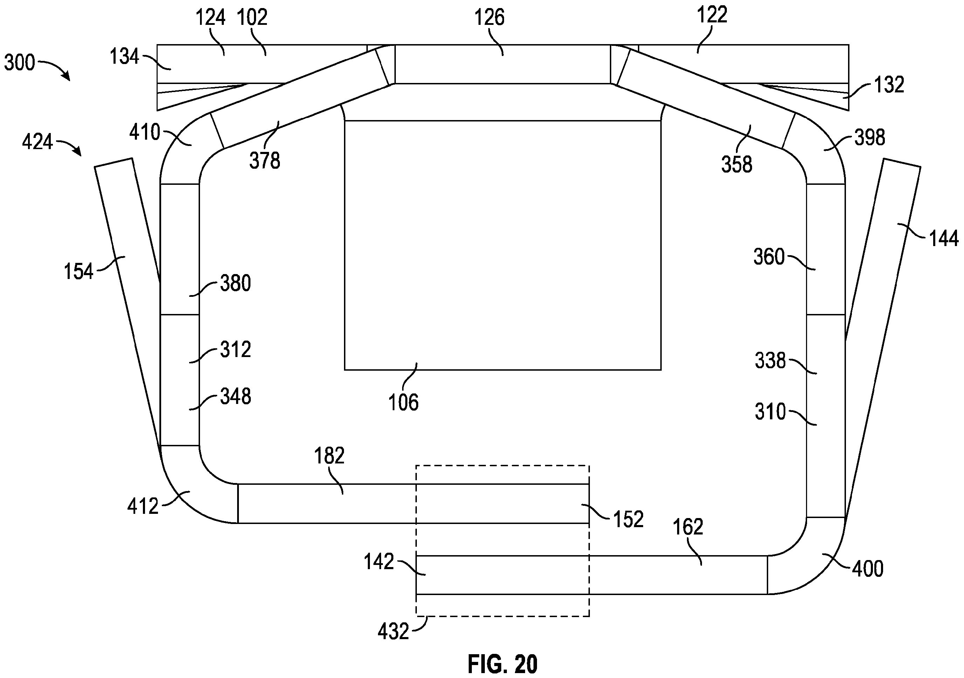

With reference to FIG. 20, the first leg 338 includes a first top extender 358, a first descender 360, and the first bottom extender 162. The first top extender 358 is connected to the support 102 via the third tab 126. The first descender 360 is connected to the first top extender 158 and to the first bottom extender 162. The first top extender 358 extends diagonally and downwardly from the third tab 126 between the fastener sleeve 106 and the first tab 122.

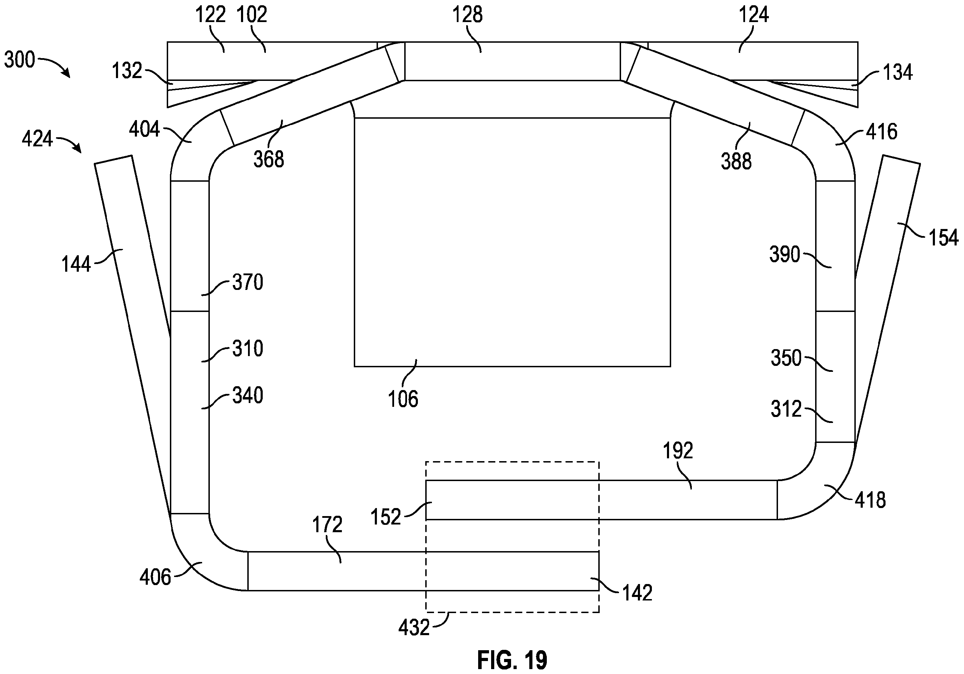

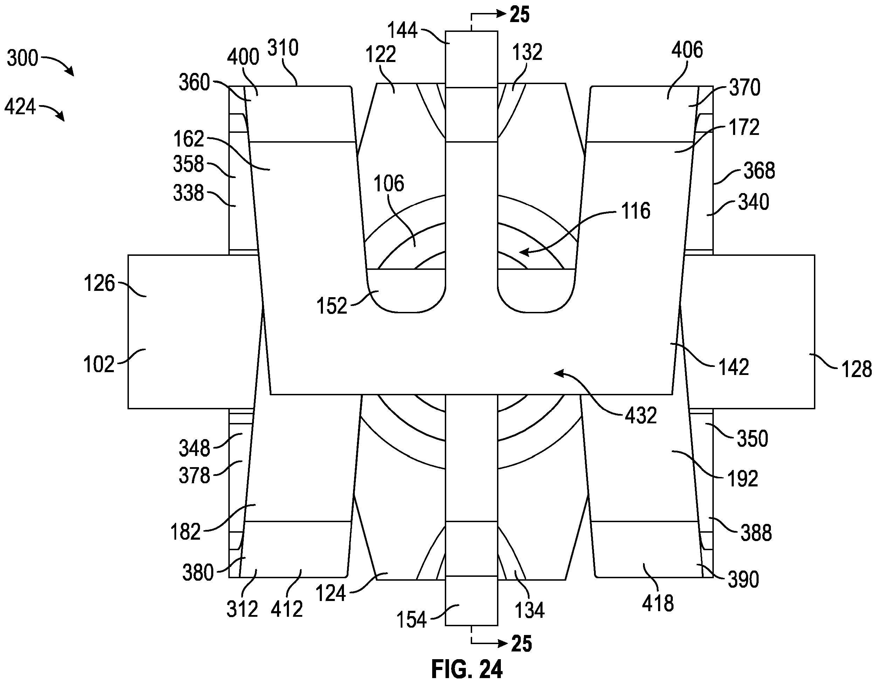

With reference to FIG. 19, the second leg 340 includes a second top extender 368, a second descender 370, and the second bottom extender 172. The second top extender 368 is connected to the support 102 via the fourth tab 128. The second descender 370 is connected to the second top extender 368 and the second bottom extender 172. The second top extender 368 extends diagonally and downwardly from the fourth tab 128 between the fastener sleeve 106 and the first tab 122. With reference to FIG. 24, the first bottom extender 162 is connected to the second bottom extender 172 via the first connector 142.

With reference to FIG. 20, the third leg 348 includes a third top extender 378, a third descender 380, and the third bottom extender 182. The third top extender 378 is connected to the support 102 via the third tab 126 opposite the first top extender 358. The third descender 180 is connected to the third top extender 378 and to the third bottom extender 182. The third top extender 378 extends diagonally and downwardly from the third tab 126 between the fastener sleeve 106 and the second tab 124.

With reference to FIG. 19, the fourth leg 350 includes a fourth top extender 388, a fourth descender 390, and the fourth bottom extender 192. The fourth top extender 388 is connected to the support 102 via the fourth tab 128 opposite the second top extender 368. The fourth descender 390 is connected to the fourth top extender 388 and the fourth bottom extender 192. The fourth top extender 388 extends diagonally and downwardly from the fourth tab 128 between the fastener sleeve 106 and the second tab 124. With reference to FIG. 24, the third bottom extender 182 is connected to the fourth bottom extender 192 via the second connector 152.

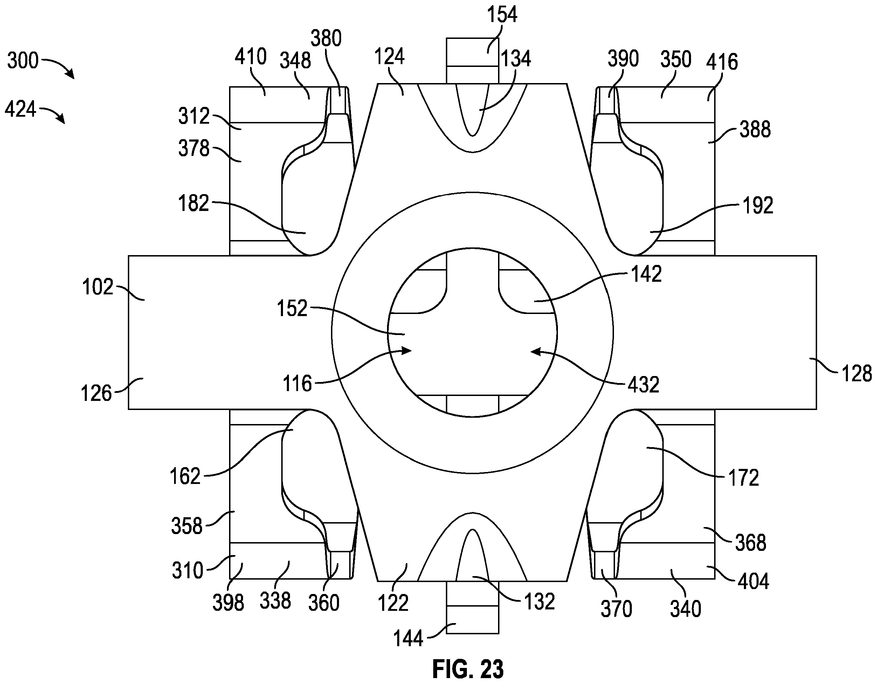

With reference to FIG. 23, the first top extender 358 and the second top extender 368 are generally parallel to one another. The third top extender 378 and the fourth top extender 388 are generally parallel to one another.

With reference to FIG. 20, the first descender 360 and the first top extender 358 define a first top corner 398. Additionally, the first descender 360 and the first bottom extender 362 define a first bottom corner 400.

With reference to FIG. 19, the second descender 370 and the second top extender 368 define a second top corner 404. Additionally, the second descender 370 and the second bottom extender 372 define a second bottom corner 406.

With reference to FIG. 20, the third descender 380 and the third top extender 378 define a third top corner 410. Additionally, the third descender 380 and the third bottom extender 182 define a third bottom corner 412.

With reference to FIG. 19, the fourth descender 390 and the fourth top extender 388 define a fourth top corner 416. Additionally, the fourth descender 390 and the fourth bottom extender 192 define a fourth bottom corner 418.

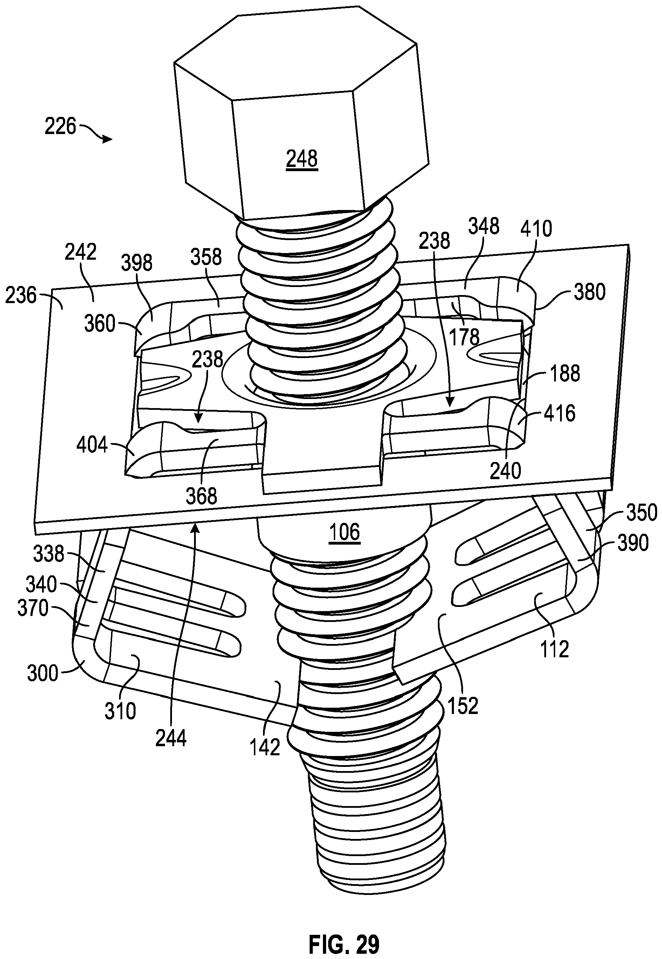

With reference to FIGS. 17-28, the box nut retainer 300 is shown in a relaxed state 424. With reference to FIGS. 29-31, the box nut retainer 300 is shown in a deployed state 426. With reference to FIGS. 17-20 and 23-28, when the box nut retainer 300 is in the relaxed state 424, the first wing 310 and the second wing 312 overlap one another at an overlap region 432. With reference to FIGS. 17, 18, and 23-28 the overlap region 232 at least partially overshadows the opening 116. With reference to FIG. 19, when the box nut retainer 300 is in the relaxed state 424, the second top corner 404 is below the support 102 between the fastener sleeve 106 and the first tab 122. When the box nut retainer 300 is in the relaxed state 424, the fourth top corner 416 is below the support 102 between the fastener sleeve 106 and the second tab 124. With reference to FIG. 20, when the box nut retainer 300 is in the relaxed state 424, the first top corner 398 is below the support 102 between the fastener sleeve 106 and the first tab 122. When the box nut retainer 300 is in the relaxed state 424, the third top corner 410 is below the support 102 between the fastener sleeve 106 and the second tab 124.

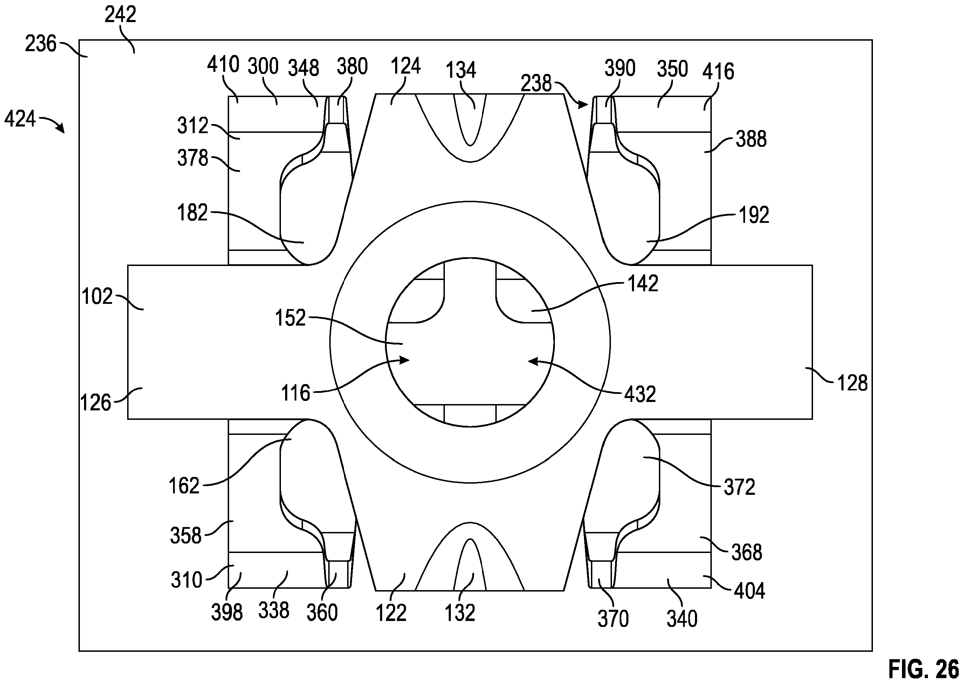

With reference to FIGS. 26-28, the second example box nut retainer 300 is installed in the panel 236. The panel 236 is as described above.

With reference to FIGS. 29-31, the second example box nut retainer 300 is installed in the panel 236 and engaged with the fastener 248. The fastener 248 is as described above.

With reference to FIG. 26, in operation, when the second example box nut retainer 300 is installed into the panel 236, the support 102, the first wing 310, and the second wing 312 engage the panel 236. The box nut retainer 300 is introduced into the aperture 238 via the first wing 310 and the second wing 312.

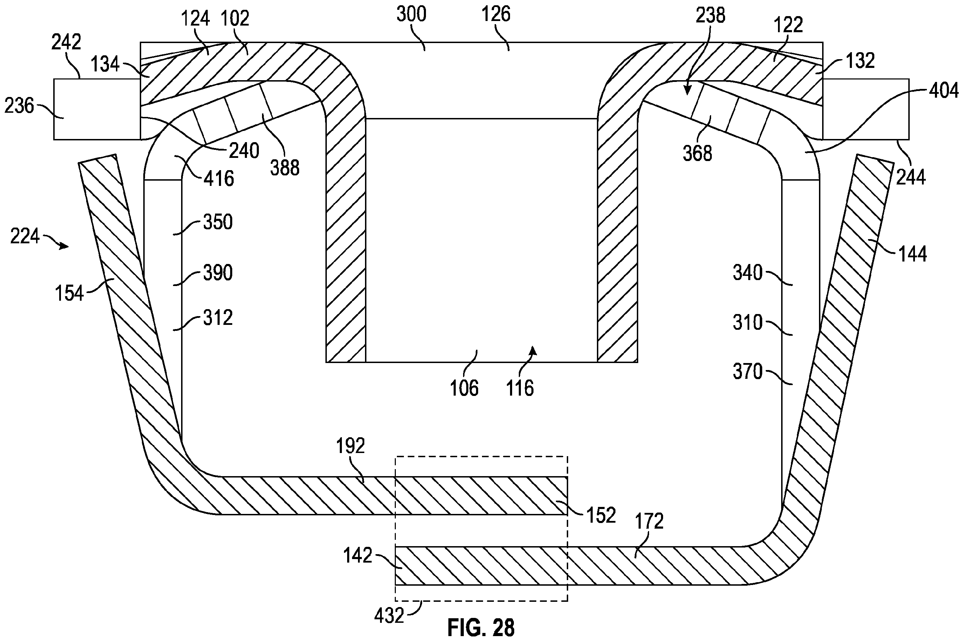

With reference to FIG. 28, it should be understood that, in operation, the first snap arm 144 and the second snap arm 154 deflect inwardly toward the fastener sleeve 106 as the first wing 310 and the second wing 312 are inserted into the aperture 238. Once the first snap arm 144 and the second snap arm 154 clear the bottom surface 244, the first snap arm 144 and the second snap arm 154 resiliently snap outwardly away from fastener sleeve 106. Thus, the first snap arm 144 and the second snap arm 154 prevent the box nut retainer 300 from being pulled out of the aperture 238 of the panel 236. With reference to FIG. 26, the third tab 126 and the fourth tab 128 engage the top surface 242 to prevent the box nut retainer 300 from being pushed completely through the aperture 238 of the panel 236. In other words, the third tab 126, the fourth tab 128, the first snap arm 144, and the second snap arm 154 (shown in FIG. 28) transversely retain the box nut retainer 300 in the aperture 238 of the panel 236. It should be understood that when the box nut retainer 300 is installed in the panel 236 and in the relaxed state 224, the third tab 126, the fourth tab 128, the first snap arm 144, and the second snap arm 154 (shown in FIG. 28) loosely retain the box nut retainer 300 in the aperture 238 of the panel 236.

With reference to FIGS. 26-28, the first wing 310, the second wing 312, the first tab 122, and the second tab 124 engage the walls 240 of the panel 236. More specifically, with reference to FIG. 28, when the box nut retainer 300 is installed in the panel 236, the first retaining dip 132 and the second retaining dip 134 are partially disposed between the top surface 242 and the bottom surface 244 to abuttingly engage the walls 240. Further, the second top extender 368 and the fourth top extender 388 are disposed between the top surface 242 and the bottom surface 244 to abuttingly engage the walls 240. Additionally, with reference to FIG. 26, the first top extender 358 and the third top extender 378 are disposed between the top surface 242 and the bottom surface 244 (shown in FIG. 28) to abuttingly engage the walls 240. Thus, the first retaining dip 132, the second retaining dip 134, the first top extender 358, the second top extender 368, the third top extender 378, and the fourth top extender 388 prevent the box nut retainer 300 from sliding relative to the panel 236. In other words, the support 102, the first wing 310, and the second wing 312 laterally retain the box nut retainer 300 in the aperture 238 of the panel 236.

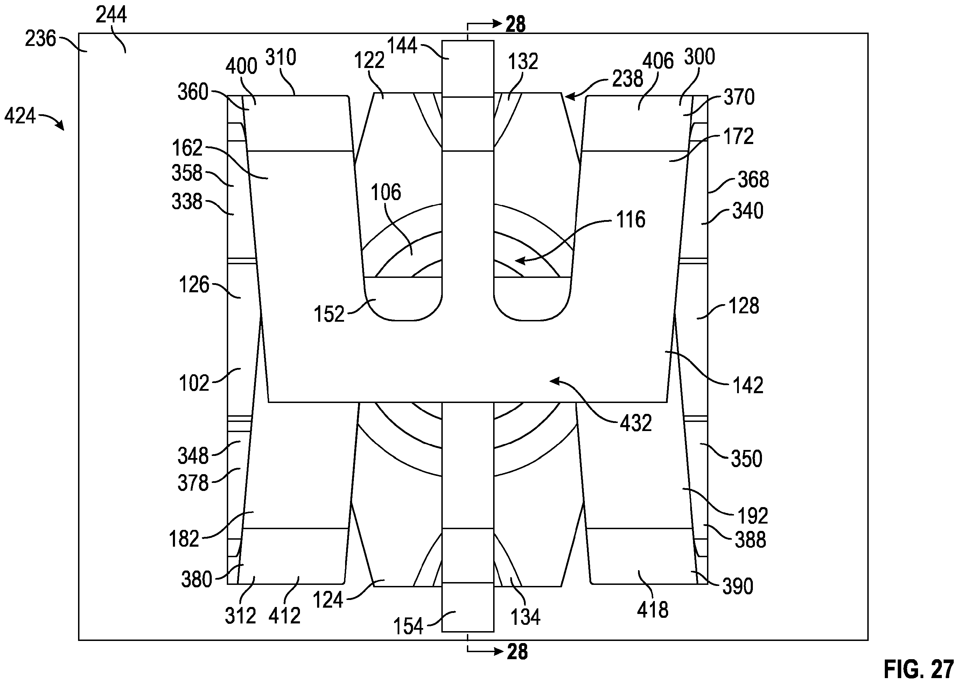

With reference to FIG. 28, when the box nut retainer 300 is installed in the panel 236 and in the relaxed state 424, the second top corner 404 and the fourth top corner 216 are aligned with the bottom surface 244. Additionally, with reference to FIG. 27, when the box nut retainer 300 is installed in the panel 236 and in the relaxed state 224, the first top corner 398 and the third top corner 410 are aligned with the bottom surface 244.

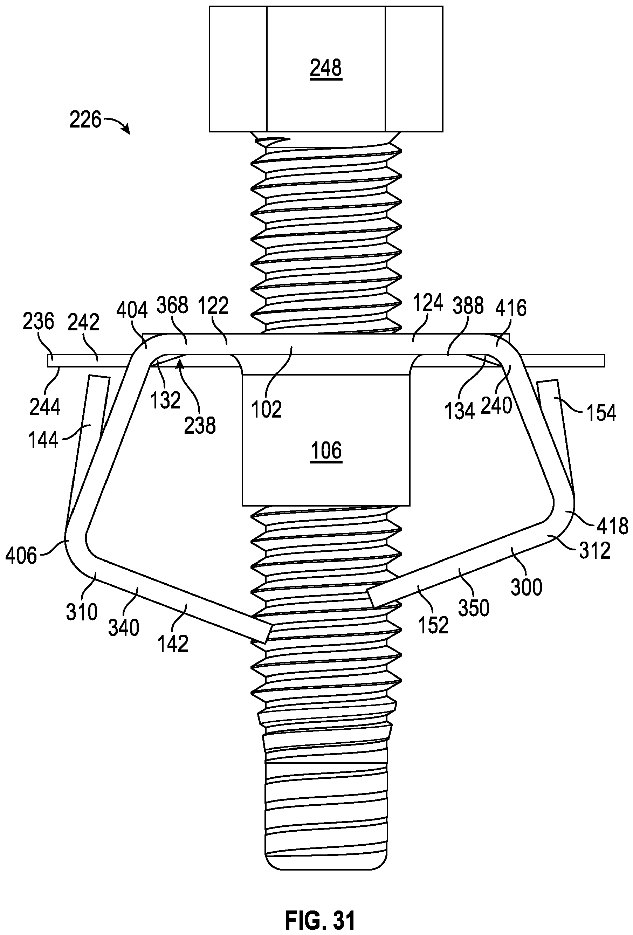

With reference to FIG. 29, further in operation, as the fastener 248 is threaded into the fastener sleeve 106, the fastener 248 initially contacts the second wing 312 and subsequently contacts the first wing 310. As the fastener 248 is threadingly driven against the first wing 310 and the second wing 312, the first wing 310 and the second wing 312 pivot relative to the support to deflect outwardly away from the fastener sleeve 106 into the deployed state 426. More specifically, the first leg 338, the second leg 340, the third leg 348, and the fourth leg 350 bend upwardly toward the bottom surface 244. When the box nut retainer 300 is in the deployed state 426, the first top corner 398, the second top corner 404, the third top corner 410, and the fourth top corner 416 are pushed out of the aperture 238 beyond the top surface 242 to align with the support 102. Thus, with reference to FIGS. 29 and 31, when the box nut retainer 300 is in the deployed state 426, the second descender 370 and the fourth descender 390 contact the walls 240 and the bottom surface 244. With reference to FIG. 29, the first descender 360 and the third descender 380 also contact the walls 240 and the bottom surface 244. In other words, as the first wing 310 and the second wing 312 deploy under pressure applied by the fastener 248, the first descender 360, the second descender 370, the third descender 380, and the fourth descender 390 are driven against the walls 240 and the bottom surface 244 to draw the third tab 126 and the fourth tab 128 against the top surface 242. Thus, when the box nut retainer 300 is installed in the panel 236 and in the deployed state 226, the third tab 126, the fourth tab 128, the first wing 310, and the second wing 312 tightly retain the box nut retainer 300 in the aperture 238 of the panel 236. In other words, when the box nut retainer 100 is installed in the panel 236 and in the deployed state 226, the panel 236 is clamped between the support 102 and the first wing 310 and between the support 102 and the second wing 312.

With reference to FIGS. 29-31, it should be understood that additional components (e.g., a second panel, a wiring harness, a brake line router, etc.) (not shown) may be used with the fastener 248. The fastener 248 may be driven into the box nut retainer 300 to robustly attach the additional components to the panel 236.

As used herein, panel may refer to any component that may be attached or assembled to another component. Any of the panels described herein may be made of any suitable material, for example, a metal or plastic material.

Embodiments of the present disclosure provide a fastening system, and, more particularly, a box nut retainer system that is configured to securely connect multiple components together. The box nut retainer system includes opposing wings with top corners between a support and a fastener sleeve, which direct the wings to engage with a bottom surface of a panel while the support clamps against a top surface of the panel.

From the foregoing, it will be appreciated that the above first and second example box nut retainers 100, 300 adapt to clampingly engage top and bottom surfaces of substrate panels. Thus, the box nut retainers 100, 300 may be used with relatively thin substrates. Because the box nut retainers 100, 300 may be used with relatively thin substrate panels, the relatively thin and thus lighter substrate panels may be used in a wider variety of applications. Thus, a vehicle produced using the box nut retainers 100, 300 and thinner, lighter substrate panels may be lighter than existing vehicles. Thus, the above-disclosed box nut retainer 100 conserves resources and may improve vehicle fuel efficiency as compared to existing fasteners.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Various features of the disclosure are set forth in the appended claims.

## Claims

1. A box nut retainer (100, 300), comprising:
a support (102), wherein the support (102) has a first tab (126, 128) and a second tab (122, 124);
a fastener sleeve (106) defining an opening (116) and extending downwardly from the support (102); and
a wing (110, 112, 310, 312) extending from the support (102) and having a top extender (158, 168, 178, 188, 358, 368, 378, 388) extending from the first tab (126, 128), and a descender (160, 170, 180, 190, 360, 370, 380, 390) connected to the top extender (158, 168, 178, 188, 358, 368, 378, 388), the top extender (158, 168, 178, 188, 358, 368, 378, 388) and the descender (160, 170, 180, 190, 360, 370, 380, 390) defining a top corner (198, 204, 210, 216, 398, 404, 410, 416) below the support (102) and between the first tab (126, 128) and the second tab (122,124).

2. The box nut retainer of claim 1, wherein the wing (110, 112, 310, 312) has a snap arm (144, 154) extending toward the support (102).

3. The box nut retainer of claim 2, wherein:
the snap arm (144, 154) extends beyond the support (102); or
the snap arm (144, 154) is L-shaped.

4. The box nut retainer of claim 2, wherein the snap arm (144, 154) pivots resiliently relative to a leg (138, 140, 148, 150, 338, 340, 348, 350) of the wing (110, 112,310,312).

5. The box nut retainer of claim 1, wherein:
the wing (110, 112, 310, 312) partially overshadows the opening (116); or
the wing (110, 112, 310, 312) is C-shaped.

6. The box nut retainer of claim 1, wherein the support (102) has a retaining dip (132, 134).

7. The box nut retainer of claim 1, wherein the wing (110, 112, 310, 312) is a first wing (110, 310) and further comprising a second wing (112, 312) extending from the support (102) and overlapping the first wing (110, 310).

8. The box nut retainer of claim 1, wherein the first tab (126, 128) is longer than the second tab (122, 124).

9. The box nut retainer of claim 1, wherein:
the top corner (198, 204, 210, 216, 398, 404, 410, 416) is a first top corner (198, 210, 398, 410),
the wing (110, 112, 310, 312) has a first leg (138, 148, 338, 348) connected to a second leg (140, 150, 340, 350),
the first leg (138, 148, 338, 348) includes the first top corner (198, 210, 398, 410), and
the second leg (140, 150, 340, 350) includes a second top corner (204, 216, 404, 416).

10. The box nut retainer of claim 1, wherein the wing (110, 112, 310, 312) is configured to deploy against a bottom surface (244) of a panel (236) to draw the support (102) against a top surface (242) of the panel (236).

11. The box nut retainer of claim 1, wherein the top extender (158, 168, 178, 188) of the wing has a kink (164, 174, 184, 194) extending curvilinearly from the support (102) to the top corner (198, 204, 210, 216).

12. The box nut retainer of claim 11, wherein the wing (110, 112) pivots relative to the support (102) via the kink (164, 174, 184, 194).

13. The box nut retainer of claim 1, wherein the top extender (358, 368, 378, 388) extends diagonally from the support (102) to the top corner (398, 404, 410, 416).

14. The box nut retainer of claim 13, wherein the wing (310, 312) is configured to pivot relative to the support (102) to drive the descender (360, 370, 380, 390) against a bottom surface (244) of a panel (236) to draw the support (102) against a top surface (242) of the panel (244).

## Patentansprüche

1. Hutmutterhalterung (100, 300), aufweisend:
einen Träger (102), wobei der Träger (102) eine erste Lasche (126, 128) und eine zweite Lasche (122, 124) aufweist;
eine Befestigungshülse (106), die eine Öffnung (116) definiert und sich von dem Träger (102) nach unten erstreckt; und
einen Flügel (110, 112, 310, 312), der sich von dem Träger aus (102) erstreckt und eine obere Verlängerung (158, 168, 178, 188, 358, 368, 378, 388), die sich von der ersten Lasche (126, 128) aus erstreckt, und eine Unterlänge (160, 170, 180, 190, 360, 370, 380, 390), die mit der oberen Verlängerung (158, 168, 178, 188, 358, 368, 378, 388) verbunden ist, aufweist, wobei die obere Verlängerung (158, 168, 178, 188, 358, 368, 378, 388) und die Unterlänge (160, 170, 180, 190, 360, 370, 380, 390) eine obere Ecke (198, 204, 210, 216, 398, 404, 410, 416) unter dem Träger (102) und zwischen der ersten Lasche (126, 128) und der zweiten Lasche (122, 124) definieren.

2. Hutmutterhalterung nach Anspruch 1, wobei der Flügel (110, 112, 310, 312) einen Schnapparm (144, 154) aufweist, der sich in Richtung des Trägers (102) erstreckt.

3. Hutmutterhalterung nach Anspruch 2, wobei:
der Schnapparm (144, 154) sich über den Träger (102) hinaus erstreckt; oder
der Schnapparm (144, 154) L-förmig ist.

4. Hutmutterhalterung nach Anspruch 2, wobei der Schnapparm (144, 154) relativ zu einem Schenkel (138, 140, 148, 150, 338, 340, 348, 350) des Flügels (110, 112, 310, 312) elastisch schwenkbar ist.

5. Hutmutterhalterung nach Anspruch 1, wobei:
der Flügel (110, 112, 310, 312) die Öffnung (116) teilweise überlagert; oder
der Flügel (110, 112, 310, 312) C-förmig ist.

6. Hutmutterhalterung nach Anspruch 1, wobei der Träger (102) eine Haltevertiefung (132, 134) aufweist.

7. Hutmutterhalterung nach Anspruch 1, wobei der Flügel (110, 112, 310, 312) ein erster Flügel (110, 310) ist, und die Hutmutterhalterung ferner einen zweiten Flügel (112, 312) aufweist, der sich von dem Träger (102) aus erstreckt und den ersten Flügel (110, 310) überlappt.

8. Hutmutterhalterung nach Anspruch 1, wobei die erste Lasche (126, 128) länger als die zweite Lasche (122, 124) ist.

9. Hutmutterhalterung nach Anspruch 1, wobei:
die obere Ecke (198, 204, 210, 216, 398, 404, 410, 416) eine erste obere Ecke (198, 210, 398, 410) ist,
der Flügel (110, 112, 310, 312) einen ersten Schenkel (138, 148, 338, 348) aufweist, der mit einem zweiten Schenkel (140, 150, 340, 350) verbunden ist,
der erste Schenkel (138, 148, 338, 348) die erste obere Ecke (198, 210, 398, 410) beinhaltet und
der zweite Schenkel (140, 150, 340, 350) eine zweite obere Ecke (204, 216, 404, 416) beinhaltet.

10. Hutmutterhalterung nach Anspruch 1, wobei der Flügel (110, 112, 310, 312) so konfiguriert ist, dass er sich an eine Unterseite (244) einer Platte (236) anlegt, um den Träger (102) an eine Oberseite (242) der Platte (236) zu ziehen.

11. Hutmutterhalterung nach Anspruch 1, wobei die obere Verlängerung (158, 168, 178, 188) des Flügels einen Knick (164, 174, 184, 194) aufweist, der sich kurvenförmig von dem Träger (102) zu der oberen Ecke (198, 204, 210, 216) erstreckt.

12. Hutmutterhalterung nach Anspruch 11, wobei der Flügel (110, 112) relativ zu dem Träger (102) über den Knick (164, 174, 184, 194) schwenkbar ist.

13. Hutmutterhalterung nach Anspruch 1, wobei sich die obere Verlängerung (358, 368, 378, 388) des Flügels diagonal von dem Träger (102) zu der oberen Ecke (398, 404, 410, 416) erstreckt.

14. Hutmutterhalterung nach Anspruch 13, wobei der Flügel (310, 312) so konfiguriert ist, dass er relativ zu dem Träger (102) schwenkbar ist, um die Unterlänge (360, 370, 380, 390) gegen eine Unterseite (244) einer Platte (236) zu treiben, um den Träger (102) an eine Oberseite (242) der Platte (244) zu ziehen.

## Revendications

1. Système de retenue d'écrou borgne (100, 300), comprenant :
un support (102), dans lequel le support (102) a une première languette (126, 128) et une deuxième languette (122, 124) ;
un manchon de fixation (106) définissant une ouverture (116) et s'étendant vers le bas à partir du support (102) ; et
une ailette (110, 112, 310, 312) s'étendant à partir du support (102) et ayant un prolongateur supérieur (158, 168, 178, 188, 358, 368, 378, 388) s'étendant à partir de la première languette (126, 128), et un descendeur (160, 170, 180, 190, 360, 370, 380, 390) relié au prolongateur supérieur (158, 168, 178, 188, 358, 368, 378, 388), le prolongateur supérieur (158, 168, 178, 188, 358, 368, 378, 388) et le descendeur (160, 170, 180, 190, 360, 370, 380, 390) définissant un coin supérieur (198, 204, 210, 216, 398, 404, 410, 416) sous le support (102) et entre la première languette (126, 128) et la deuxième languette (122,124).

2. Dispositif de retenue d'écrou selon la revendication 1, dans lequel l'ailette (110, 112, 310, 312) a un bras d'encliquetage (144, 154) s'étendant vers le support (102).

3. Dispositif de retenue d'écrou selon la revendication 2, dans lequel :
le bras d'encliquetage (144, 154) s'étend au-delà du support (102) ; ou
le bras d'encliquetage (144, 154) est en forme de L.

4. Dispositif de retenue d'écrou selon la revendication 2, dans lequel le bras d'encliquetage (144, 154) pivote élastiquement par rapport à une patte (138, 140, 148, 150, 338, 340, 348, 350) de l'ailette (110, 112, 310, 312).

5. Dispositif de retenue d'écrou selon la revendication 1, dans lequel :
l'ailette (110, 112, 310, 312) masque partiellement l'ouverture (116) ; ou
l'ailette (110, 112, 310, 312) est en forme de C.

6. Dispositif de retenue d'écrou selon la revendication 1, dans lequel le support (102) a un creux de retenue (132, 134).

7. Dispositif de retenue d'écrou selon la revendication 1, dans lequel l'ailette (110, 112, 310, 312) est une première ailette (110, 310) et comprenant en outre une deuxième ailette (112, 312) s'étendant à partir du support (102) et recouvrant la première ailette (110, 310).

8. Dispositif de retenue d'écrou selon la revendication 1, dans lequel la première languette (126, 128) est plus longue que la deuxième languette (122, 124).

9. Dispositif de retenue d'écrou selon la revendication 1, dans lequel :
le coin supérieur (198, 204, 210, 216, 398, 404, 410, 416) est un premier coin supérieur (198, 210, 398, 410),
l'ailette (110, 112, 310, 312) a une première patte (138, 148, 338, 348) reliée à une deuxième patte (140, 150, 340, 350),
la première patte (138, 148, 338, 348) comprend le premier coin supérieur (198, 210, 398, 410), et
la deuxième patte (140, 150, 340, 350) comprend un deuxième coin supérieur (204, 216, 404, 416).

10. Dispositif de retenue d'écrou selon la revendication 1, dans lequel l'ailette (110, 112, 310, 312) est configurée pour se déployer contre une surface inférieure (244) d'un panneau (236) pour tirer le support (102) contre une surface supérieure (242) du panneau (236).

11. Dispositif de retenue d'écrou selon la revendication 1, dans lequel le prolongateur supérieur (158, 168, 178, 188) de l'ailette a un coude (164, 174, 184, 194) s'étendant de manière curviligne à partir du support (102) jusqu'au coin supérieur (198, 204, 210, 216) .

12. Dispositif de retenue d'écrou selon la revendication 11, dans lequel l'ailette (110, 112) pivote par rapport au support (102) via le coude (164, 174, 184, 194).

13. Dispositif de retenue d'écrou selon la revendication 1, dans lequel le prolongateur supérieur (358, 368, 378, 388) s'étend en diagonale à partir du support (102) jusqu'au coin supérieur (398, 404, 410, 416).

14. Dispositif de retenue d'écrou selon la revendication 13, dans lequel l'ailette (310, 312) est configurée pour pivoter par rapport au support (102) pour entraîner le descendeur (360, 370, 380, 390) contre une surface inférieure (244) d'un panneau (236) pour tirer le support (102) contre une surface supérieure (242) du panneau (244).
